# EUROPÄISCHE PATENTSCHRIFT

(11) **EP 2 656 466 B1**
(45) Veröffentlichungstag und Bekanntmachung des Hinweises auf die Patenterteilung: **03.02.2016**
(21) Anmeldenummer: 11796617.6
(22) Anmeldetag: 21.11.2011
(51) Int. Cl.: H02H 7/085

(54) **VERFAHREN UND EINRICHTUNG ZUM STEUERN EINER VERSTELLEINRICHTUNG EINES KRAFTFAHRZEUGS**
METHOD AND DEVICE FOR CONTROLLING AN ADJUSTING DEVICE OF A MOTOR VEHICLE
PROCÉDÉ ET DISPOSITIF POUR COMMANDER UN DISPOSITIF DE RÉGLAGE D'UN VÉHICULE AUTOMOBILE

(30) Priorität: 22.12.2010 DE 102010055650
(43) Veröffentlichungstag der Anmeldung: 30.10.2013
(60) Teilanmeldung: 15180934.0
(73) Patentinhaber: Brose Fahrzeugteile GmbH & Co. Kommanditgesellschaft, Hallstadt, 96103 Hallstadt (DE)
(72) Erfinder: KROMER, Alex, 96135 Stegaurach (DE); KLAUCK, Thomas, 66663 Merzig (DE)
(74) Vertreter: FDST Patentanwälte
(86) Internationale Anmeldenummer: PCT/EP2011/005846
(87) Internationale Veröffentlichungsnummer: WO 2012/084109

(56) Entgegenhaltungen:
- DE-A1- 19 901 840

## Beschreibung

Die Erfindung betrifft ein Verfahren zum Steuern einer Verstelleinrichtung eines Kraftfahrzeugs sowie eine danach arbeitende Verstelleinrichtung.

In der DE 196 15 581 A1 wird ein Verfahren zum Ansteuern elektrischer Antriebe in Fahrzeugen beschrieben, bei dem für einen Elektromotor, der ein Aggregat wie zum Beispiel einen Scheibenwischer oder eine Fensterscheibe eines elektrischen Fensterhebers antreibt, ein Arbeitsbereich gewählt wird. Unter Arbeitsbereich wird hierbei ein Drehmoment- und Drehzahlband verstanden, innerhalb derer der Elektromotor betrieben ist, und deren jeweilige Kombinationen während des Betriebs zulässig sind. Um eine Beschädigung des Aggregats oder des Elektromotors zu verhindern, wird während des Betriebs das Drehmoment des Elektromotors überwacht. Sobald ein Drehmoment auftritt, das oberhalb des Drehmomentbandes oder an dessen Grenze liegt, wird der Elektromotor auf das maximale Drehmoment des Drehmomentbandes geregelt.

Aus der EP 0 966 782 B1 ist ein Verfahren zur Steuerung und Regelung der Bewegung von elektrisch betriebenen Aggregaten bekannt. Für die Verstellung beispielsweise einer Fensterscheibe wird der diese antriebende Elektromotor auf eine Normalkurve geregelt. Die Normalkurve ist die zur Verstellung benötigte Kraft in Abhängigkeit des Verstellwegs. Für jeden Bereich des Verstellwegs ist eine Überschusskraft definiert, mit der insbesondere mittels Addition zur Normalkurve eine Hüllkurve berechnet wird. Sobald die zur Verstellung der Fensterscheibe notwendige Kraft größer als die von der Hüllkurve vorgegebene maximale Kraft ist, wird die Verstellkraft auf diese begrenzt. Erfolgt innerhalb einer vorgegebenen Zeitspanne keine weitere Verstellung der Fensterscheibe, so wird die Bewegung der Fensterscheibe gestoppt oder die Fensterscheibe reversiert. Die Hüllkurve und/oder die Normalkurve werden vorzugsweise auf einem Teststand individuell für den Elektromotor ermittelt und in einer Tabelle oder einem Kennfeld in Abhängigkelt von beispielsweise der Motordrehzahl, der Betriebs- und/oder Umgebungstemperatur gespeichert.

Aus der DE 199 01 840 A1 sind ein elektrischer Stellantrieb für Kraftfahrzeugkomponenten, beispielsweise Fensterheber, und ein Verfahren zu dessen Steuerung bekannt, wobei eine besonders schnelle Anpassung an die aktuellen Betriebszustände mittels einer Unterlagerung einer Drehzahlregelung durch eine Drehmomentregelung ermöglicht werden soll. Zur Überwindung von Schwergängigkeiten und der Aufrechterhaltung der Motorbewegung mit einer bestimmten Drehzahl unter Berücksichtigung des Einklemmschutz kann die hierzu dienende untere Maximalstromschwelle angehoben werden, um aus der nachfolgenden Reaktion des Motorstroms auf die Anpassung der Maximalstromschwelle zusätzliche Informationen zu gewinnen und im Fall lokaler Schwergängigkeiten eine angepasste Maxlmalstromwertkurve vorzugeben.

Der Erfindung liegt die Aufgabe zugrunde, ein verbessertes Verfahren zum Steuern einer Verstelleinrichtung eines Kraftfahrzeugs anzugeben, bei dem ein sicheres Verstellen des Verstellteils gewährleistet ist. Dabei sollen insbesondere auch etwaige Einklemmkräfte reduziert werden. Des Weiteren soll eine geeignete Verstelleinrichtung eines Kraftfahrzeugs mit einem motorisch angetriebenen Verstellteil angegeben werden.

Bezüglich des Verfahrens wird diese Aufgabe erfindungsgemäß gelöst durch die Merkmale des Anspruchs 1. Vorteilhafte Weiterbildungen und Ausgestaltungen sind Gegenstand der hierauf rückbezogenen Unteransprüche.

Die Verstelleinrichtung des Kraftfahrzeugs ist beispielsweise eine elektrisch betätigbare Fahrzeugtür, eine Heckklappe, ein elektrischer Fensterheber, ein elektrisches Schiebedach oder auch eine Verdunklungseinrichtung. Insbesondere findet das vorgeschlagene Verfahren hierbei bevorzugt Anwendung während einer Schließbewegung des Verstellteils. Im Normalbetrieb wird die Geschwindigkeit des Antriebs, mittels dessen das Verstellteil entlang eines Verstellweges verbracht wird, auf einen Geschwindigkeits-Sollwert geregelt, wobei diese Regelung zumindest in einem Teilbereich des Verstellweges erfolgt.

Der Geschwindigkeits-Sollwert ist beispielsweise zumindest abschnittsweise entlang des Verstellwegs konstant oder steht in funktionalem Zusammenhang mit dem bereits zurückgelegten Verstellweg und/oder der Position des Verstellteils. Insbesondere ist bei der Steuerung eines elektrischen Fensterhebers der Geschwindigkeits-Sollwert bei einem Einfahren der Fensterscheibe in einen üblicherweise mit einem Dichtgummi versehenen oberen Scheibenanschlag im Vergleich zu dem sonstigen Geschwindigkeits-Sollwert reduziert. Der Geschwindigkeits-Sollwert ist beispielsweise in einer Tabelle oder in einem Kennfeld gespeichert, wobei hierbei insbesondere der Geschwindigkeits-Sollwert in Abhängigkeit von der Betriebs- und/oder der Umgebungstemperatur sowie weiteren Umgebungsvariablen hinterlegt ist.

Tritt während der Verbringung des Verstellteils im Zuge der Regelung auf den Geschwindigkeits-Sollwert eine Schwergängigkeit auf, so wird die Antriebskraft auf einen Kraft-Sollwert geregelt. Insbesondere ist der Kraft-Sollwert geringer als ein gesetzlich vorgeschriebener Grenzwert oder ein Wert, der zur Beschädigung der Verstelleinrichtung oder etwaiger Insassen des Kraftfahrzeugs führen würde. Beispielsweise ist der Kraft-Sollwert zumindest abschnittsweise entlang des Verstellwegs konstant. Der Kraft-Sollwert kann ebenfalls abhängig von Umgebungsvariablen sein.

Diese Regelung ist für eine erste Zeitspanne aktiv, wobei die Zeitspanne beispielsweise durch einen Benutzer veränderbar ist. Insbesondere ist diese Zeitspanne mittels Betätigen eines Schalters, welcher die Verstelleinrichtung steuert, wie zum Beispiel einem Taster des elektrischen Fensterhebers, verkürz- oder verlängerbar. Geeigneterweise ist die erste Zeitspanne an aktuelle Anforderungen oder Betriebsbedingungen der Verstelleinrichtung angepasst. Insbesondere ist die erste Zeitspanne jedoch konstant und beträgt beispielsweise zwischen 0,1s und 1 s, vorzugsweise 0,5s.

Nach Ablauf der ersten Zeitspanne wird im Einklemmfall der mit dem Verstellteil in Wirkverbindung stehende Antrieb angehalten oder das Verstellteil reversiert. Der Antrieb wird somit derart angesteuert, dass das Verstellteil entlang des Verstellweges in die der ursprünglichen Bewegungsrichtung entgegengesetzte Richtung verbracht wird.

Unter Einklemmfall wird verstanden, dass die Schwergängigkeit von einem Objekt verursacht ist, das sich innerhalb des Verstellbereiches des Verstellteils und in mechanischem Kontakt zu diesem befindet. Das Objekt, beispielsweise ein Körperteil einer Person, wie eine Hand, soll vor einer Verletzung oder einer Beschädigung geschützt werden. Zusätzlich oder alternativ soll die Verstelleinrichtung vor einer Beschädigung geschützt werden, falls das Objekt derart ausgestaltet ist, dass ein weiteres Verbringen des Verstellteils entlang des Verstellweges in der ursprünglichen Bewegungsrichtung zu einer Beschädigung der Verstelleinrichtung führen würde. Insbesondere wirkt das Objekt der ursprünglichen Bewegungsrichtung des Verstellteils entgegen.

Liegt kein Einklemmfall vor, also ist beispielsweise die Schwergängigkeit auf eine kurzzeitige Störung der Verstelleinrichtung, wie insbesondere eine Erschütterung oder eine Verschmutzung innerhalb etwaiger Führungsschienen zurückzuführen, innerhalb derer sich das Verstellteil befindet, so wird das Verstellteil nach Ablauf der ersten Zeitspanne erneut auf den Geschwindigkeits-Sollwert geregelt.

Aufgrund der Regelung der Antriebsgeschwindigkeit ist gewährleistet, dass das Verstellteil im Normalbetrieb stets in annähernd der gleichen Zeitspanne entlang des Verstellwegs verbracht wird. Dies führt zu einer ansprechenden Wahrnehmung der Insassen des Kraftfahrzeugs hinsichtlich der Verstellbewegung und zu einem vorhersagbaren Zeitpunkt, zu dem sich das Verstellteil in einer bestimmten Position befindet. Weiterhin führt die beispielsweise durch eine kurze externe Störung hervorgerufen Schwergängigkeit nicht zu einem Abbruch des Verstellens, sondern die Verstelleinrichtung verbringt das Verstellteil sicher entlang des Verstellweges in die gewünschte Position. Sollte die Störung das sich innerhalb des Verstellbereiches befindliche Objekt sein, so wird dieses aufgrund der die Einklemmkraft begrenzenden Kraftregelung nicht verletzt, wobei weiterhin die Verstelleinrichtung selbst nicht beschädigt wird.

Die Schwergängigkeit und der Einklemmfall werden beispielsweise mittel zusätzlicher Sensoren, insbesondere mittels Einklemmschutzsensoren in einem Anschlagbereich des Verstellteils, erfasst. In einer bevorzugten Ausführungsform wird jedoch im Normalbetrieb anhand der für die Verstellung des Verstellteils, die mit einer dem Geschwindigkeits-Sollwert entsprechenden Geschwindigkeit erfolgt, benötigten Kraft die Schwergängigkeit erkannt. Beispielsweise wird auf den KraftSollwert geregelt, sobald der Wert für die Antriebskraft einen bestimmten Grenzwert und/oder der Anstieg der benötigten Antriebskraft innerhalb einer definierten Zeitspanne einen bestimmten Anstiegsgrenzwert überschreitet.

Sobald auf den Kraft-Sollwert geregelt wird, kann zweckmäßigerweise alternativ oder zusätzlich der Einklemmfall anhand der realisierten Geschwindigkeit des Antriebs erkannt werden. Insbesondere zeichnet sich der Einklemmfall dadurch aus, dass trotz der von dem Antrieb aufgebrachten Antriebskraft in Höhe eines geeigneten Kraft-Sollwerts die Geschwindigkeit des Verstellteils null beträgt. Liegt der Wert der Geschwindigkeit jedoch oberhalb eines bestimmten Grenzwertes oder steigert sich die Geschwindigkeit um einen bestimmten Wert innerhalb eines bestimmten Zeitraums, so wird nach Ablauf der ersten Zeitspanne wieder auf den Geschwindigkeits-Sollwert geregelt. Dabei wird die erste Zeitspanne beispielsweise beendet, sobald der Wert der Geschwindigkeit den bestimmten Grenzwert erreicht.

Ist nach Ablauf der ersten Zeitspanne nicht eindeutig feststellbar, ob der Einklemmfall vorliegt, so wird geeigneterweise die erste Zeitspanne solange verlängert, also die Regelung auf den Kraft-Sollwert fortgeführt, bis eine Unterscheidung möglich ist. Dies ist beispielsweise der Fall, wenn das Verstellteil sich zwar entlang des Verstellweges bewegt, der Wert der Geschwindigkeit jedoch unterhalb des bestimmten Grenzwertes liegt.

Geeigneterweise wird nach Ablauf der ersten Zeitspanne, wenn kein Einklemmfall eingetreten ist, die Geschwindigkeit des Verstellteils stetig, insbesondere linear, auf den Geschwindigkeits-Sollwert angepasst. Auf diese Weise werden starke Belastungen der Verstelleinrichtung und/oder hohe auftretende Antriebskräfte vermieden. Weiterhin ist die Geräuschbelastung der Insassen des Kraftfahrzeugs geringer. Ebenso ist das Erscheinungsbild für die Insassen während des Betriebs der Verstelleinrichtung ansprechender, da das Verstellteil keine ruckartigen Bewegungen ausführt.

Zur Reduzierung der etwaigen Einklemmkräfte wird bei Erfassung der Schwergängigkeit, wenn also die Regelung auf den Geschwindigkeits-Sollwert abgebrochen wird, gemäß der Erfindung die Antriebskraft zunächst auf eine erste Kraft vermindert. Dies hat zur Folge, dass das Objekt nicht mit dem Kraft-Sollwert und einer zusätzlichen Kraft eingeklemmt wird, die dem Trägheitsmoment des Verstellteils entspringt, falls die Schwergängigkeit durch das Objekt hervorgerufen ist. Diese zusätzliche Kraft ist nur äußerst aufwendig bestimmbar, da das Trägheitsmoment von dem Zustand der Verstelleinrichtung abhängt. So beeinflussen insbesondere die Betriebstemperatur und etwaige Verschleißerscheinungen der Verstelleinrichtung das Trägheitsmoment. Innerhalb einer zweiten Zeitspanne wird die Antriebskraft auf den Kraft-Sollwert erhöht. Mit dieser Maßnahme ist sichergestellt, dass das Verstellteil die Schwergängigkeit der Verstelleinrichtung, wie beispielsweise eine Verschmutzung, sicher während der Verstellung überbrückt, wobei die Einklemmkräfte in dem Einklemmfall möglichst gering und beherrschbar bleiben.

Zweckmäßigerweise beträgt die erste Kraft nahezu Null. Hierdurch wird in dem Einklemmfall das Objekt zunächst im Wesentlichen lediglich von der von dem Trägheitsmoment verursachten Kraft beaufschlagt. Diese lässt innerhalb kürzester Zeit nach und führt daher bei einem entsprechenden Geschwindigkeits-Sollwert zu keiner Beschädigung oder Verletzung. Infolgedessen wird das Objekt während der restlichen Regelungsphase auf den Kraft-Sollwert mit einer definierten und bekannten Kraft beaufschlagt. Somit tritt bei einer geeigneten Vorgabe des Kraft-Sollwerts während der Regelung auf diesen ebenfalls keine Beschädigung bzw. Verletzung auf.

Vorteilhafterweise findet die Erhöhung der ersten Kraft auf den Kraft-Sollwert stetig, insbesondere linear, statt. Auf diese Weise werden starke Belastungen der Verstelleinrichtung und des etwaigen Objekts vermieden. Zudem ist die Geräuschbelastung gering. Falls das Objekt eine Hand oder dergleichen eines Insassen ist, werden weiterhin beispielsweise Überreaktionen vermieden, die sich durch eine ruckartige Ansteuerung des Verstellteils ergäben.

Zweckmäßigerweise wird als Kraft-Sollwert ein während des Normalbetriebs realisierter Wert für die Antriebskraft herangezogen, um eine weitere Reduzierung der etwaigen Einklemmkräfte Im Einklemmfall zu erreichen. Geeigneterweise wird somit das Objekt während der Phase der Regelung auf den Kraft-Sollwert nicht weiter übermäßig beschädigt oder verletzt, da der Kraft-Sollwert bereits vor Eintreten dieser Regelphase eingetreten Ist und während dieser Regelung ebenfalls mit einer Beschädigung oder Verletzung des Objekts gerechnet wurde musste.

Zusammenfassend wird zur Differenzierung zwischen einem Einklemmfall und einer Schwergängigkeit von der Drehzahlregelung auf eine Kraftregelung gewechseit und ein Zeitfenster betrachtet. Der Wechsel auf die Kraftregelung erfolgt, indem die Antriebskraft bzw. die Geschwindigkeit oder Motordrehzahl reduziert und anschließend auf einen vorgegebenen Kraftsollwert geregelt wird. Für die Kraftregelung wird bevorzugt ein vor der Umschaltung von der Geschwindigkeits- bzw. Drehzahlregelung auf die Kraftregelung vorhandener Kraftwert als Sollwert herangezogen.

Zweckmäßigerweise wird der Kraft-Sollwert im Normalbetrieb kontinuierlich aktualisiert. In einer vorteilhaften Ausgestaltung entspricht der Kraft-Sollwert dem vor einer dritten Zeitspanne realisierten Wert der Antriebskraft, wobei diese beispielsweise zwischen 0s und 1s und insbesondere 0,01s beträgt. Somit ist der KraftSollwert auf aktuelle Anforderungen der Verstelleinrichtungen angepasst, beispielsweise einer veränderten Umgebungstemperatur. Weiterhin werden hierdurch für die Regelung keine weiteren Komponenten innerhalb der Verstelleinrichtung benötigt, wie beispielsweise ein Speicher für das Kennfeld oder weitere Sensoren zur Anpassung des Kraft-Sollwertes an die Umgebungsvariablen.

Wird nach Ablauf der ersten Zeitspanne erneut auf den Geschwindigkeits-Sollwert geregelt, so wird geeigneterweise der Kraft-Sollwert für eine vierte Zeitspanne konstant gehalten. Insbesondere wird der Kraft-Sollwert innerhalb der vierten Zeitspanne nicht aktualisiert, wenn die vierte Zeitspanne länger als die dritte Zeitspanne ist. Während dieser vierten Zeitspanne entspricht der Kraft-Sollwert dem Kraft-Sollwert, auf den während der ersten Zeitspanne geregelt wurde. Mit anderen Worten entspricht, nachdem das Verstellteil die Schwergängigkeit überwunden hat und dessen Geschwindigkeit wieder auf den Geschwindigkeits-Sollwert geregelt wird, der Kraft-Sollwert für die Dauer der vierten Zeitspanne dem KraftSollwert, auf den geregelt wurde, während das Verstellteil durch die Schwergängigkeit verbracht wurde.

Die vierte Zeitspanne beträgt zweckmäßigerweise zwischen 0,05s und 2s und insbesondere 0,5s. Sie ist geeigneterweise konstant oder wird beendet, sobald die Geschwindigkeit des Verstellteils eine Grenzgeschwindigkeit überschreitet. Somit wird beispielsweise verhindert, dass der Kraft-Sollwert im Fall einer Anzahl von Schwergängigkeiten kontinuierlich erhöht wird. So wird häufig während der sich an die erste Zeitspanne anschließenden Geschwindigkeitsregelung eine erhöhte Antriebskraft benötigt, um den Antrieb erneut auf den Geschwindigkeits-Sollwert zu beschleunigen.

Bezüglich der Verstelleinrichtung wird die genannte Aufgabe gelöst durch die Merkmale des Anspruchs 9. Hierzu weist die Verstelleinrichtung eine Geschwindlgkeits- und Kraftregelung auf, wobei die Regelung beispielsweise in zwei separaten Steuereinheiten oder in einer Integrierten Steuereinheit verwirklicht ist. Die Regelung ist zumindest dann aktiv, wenn sich das Verstellteil in einem Teilbereich des Verstellweges befindet und das Verstellteil bewegt werden soll. Im Normalbetrieb wird die Geschwindigkeit des Antriebs mittels der Geschwindigkeitsregelung auf einen Geschwlndigkeits-Sollwert geregelt.

Im Fall einer Schwergängigkeit während des Betriebs greift die Kraftregelung ein und regelt für eine erste Zeitspanne die Antriebskraft auf einen Kraft-Sollwert. Nach Ablauf der ersten Zeitspanne wird mittels einer geeigneten Ansteuerung des Antriebs das Verstellteil reversiert oder der Antrieb zumindest angehalten, wenn die Schwergängigkeit auf einen Einklemmfall zurückzuführen ist. Anderenfalls erfolgt nach Ablauf der ersten Zeitspanne eine erneute Regelung der Geschwindigkeit des Antriebs auf den Geschwindigkeits-Sollwert.

Beispielsweise sind der Antrieb ein herkömmlicher Elektromotor und die Verstelleinrichtung ein elektrischer Fensterheber. Vorteilhafterweise wird Drehzahl des Elektromotors mittels Hall-Sensoren erfasst und damit die Geschwindigkeit des Antriebs bzw. des Verstellteils gemessen. Geeigneterweise wird der Elektromotor mittels einer an sich bekannten Pulsweitenmodulation mit Energie versorgt. Somit ist über Variation des Pulslänge bzw. des Puls-Pausen-Verhältnisses eine Einstellung der Leistungsabgabe des Elektromotors und somit ein Kontrollieren der Antriebskraft ermöglicht.

Ebenfalls ist es möglich, die Stromaufnahme und/oder die an den Elektromotor angelegt elektrische Spannung und somit die Antriebskraft mittels eines variablen Widerstandes zu verändern. Zweckmäßigerweise wird mittels einer motorspezifischen Kennlinie und der gemessenen Drehzahl die Antriebskraft bestimmt. Vorteilhafterweise ist die Geschwindigkelts- und Kraftregelung derart ausgestaltet, dass diese in bereits bestehende Komponenten eines herkömmlichen elektrischen Fensterhebers integrierbar ist, so dass der Fensterheber beispielsweise mittels eines Softwareupdates auf das vorgeschlagene Verfahren umrüstbar ist. Die Ausgestaltungen des obigen Verfahrens sind sinngemäß auch auf die Verstelleinrichtung übertragbar.

Der Anspruch 10 betrifft eine Verwendung einer Verstelleinrichtung.

Nachfolgend wird ein Ausführungsbeispiel der Erfindung anhand einer Zeichnung näher erläutert. Darin zeigen:
- Fig. 1: in schematischer Darstellung eine Verstelleinrichtung mit einem motorisch angetriebenen Verstellteil,
- Fig. 2: als Flussdiagramm ein Verfahren zum Betreiben der Verstelleinrichtung mit dem Verstellteil,
- Fig. 3: einen zeitlichen Verlauf der Geschwindigkeit und der Kraft des Antriebs im Fall einer Schwergängigkeit, die ein Einklemmfall ist, und
- Fig. 4: die Verläufe gemäß Fig. 3 in dem Fall, dass die Schwergängigkeit kein Einklemmfall ist.

Einander entsprechende Teile sind in allen Figuren mit den gleichen Bezugszeichen versehen.

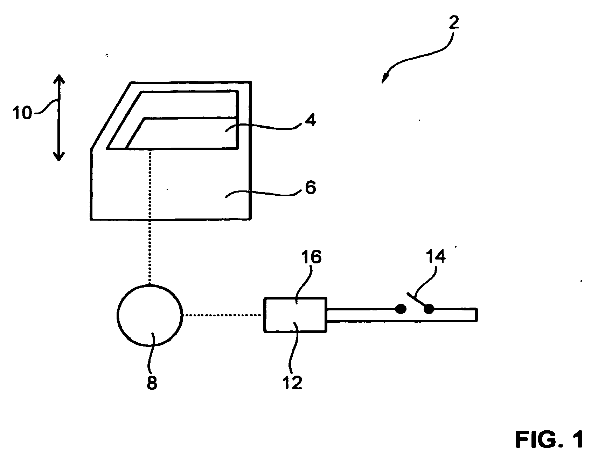

In Fig. 1 ist schematisch eine Verstelleinrichtung 2 mit einem Verstellteil 4 dargestellt. Die Verstelleinrichtung 2 ist beispielsweise ein elektrischer Fensterheber, der in einer Tür 6 eines Kraftfahrzeugs integriert ist. Das Verstellteil 4 ist hierbei eine Fensterscheibe, die mittels eines Antriebs 8 entlang eines Verstellweges 10 verbracht wird. Der Antrieb 8 wird mittels einer Steuereinheit 12 gesteuert, welche über einen Taster 14 von einem Insassen des Kraftfahrzeugs aktiviert wird. Innerhalb der Steuereinheit 12 befindet sich eine Geschwindigkeits- und Kraftregelung 16.

Der Antrieb 8 ist beispielsweise ein Elektromotor, der mittels Pulsweitenmodulation betrieben wird. Mittels Variation des Puls-/Pausenverhältnisses wird die dem Antrieb 8 zugeführte elektrische Energie gesteuert. Insbesondere steht diese Energie in funktionalem Zusammenhang mit der Antriebskraft 18, die das Verstellteil 4 entlang des Verstellweges 10 verbringt. Der Zusammenhang ist beispielsweise linear, und während der Steuerung ist die an den Elektromotor angelegte elektrische Spannung insbesondere konstant. Weiterhin weist der Elektromotor vorzugsweise zwei Hall-Sensoren auf, mittels derer die Drehzahl des Elektromotors und somit die Geschwindigkeit 20 des Antriebs 8 gemessen wird.

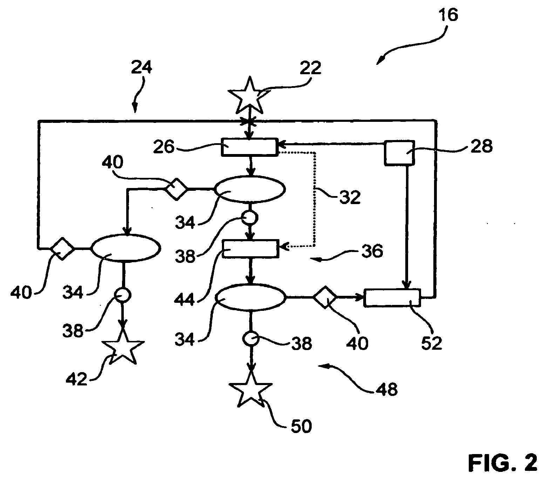

Fig. 2 zeigt den zeitlichen Ablauf eines Verfahrens zum Betreiben der Verstelleinrichtung 2, insbesondere während eines Schließvorgangs der Fensterscheibe. Das Verfahren ist in der Geschwindigkeits- und Kraftregelung 16 integriert. Sobald ein Startereignis 22 eintritt, tritt in dem Normalfall 24 eine Geschwindigkeitsregelung 26 in Kraft, die die Geschwindigkeit 20 des Antriebs 8 auf einen Geschwindigkeits-Sollwert 28 regelt. Das Startereignis 22 ist beispielsweise die Betätigung des Tasters 14 oder das Erreichen einer bestimmten Position entlang des Verstellwegs 10 durch das Verstellteil 4.

Während der Regelung auf den Geschwindigkeits-Sollwert 28, der beispielsweise konstant ist, wird die vor einer dritten Zeitspanne 30 für die Verstellung benötigte Antriebskraft 18 als ein Kraft-Sollwert 32 gespeichert. Ferner wird die Antriebskraft 18 mittels einer Überwachungseinheit 34 überwacht, ob eine Schwergängigkeit 36 vorliegt. Steigt die Antriebskraft 18 beispielsweise sehr stark an oder liegt diese höher als ein bestimmter Grenzwert, so gibt die Überwachungseinheit 34 ein positives Signal 38. Anderenfalls gibt die Überwachungseinheit 34 ein negatives Signal 40. Bei dem negativen Signal 40 wird in einer weiteren Überwachungseinheit 34 überwacht, ob das Verstellteil 4 das Ende des Verstellweges 10 oder zumindest das Ende des Bereiches des Verstellweges 10 erreicht hat, innerhalb dessen das Verstellteil 4 mittels des Verfahrens verbracht wird. Falls dies der Fall ist, tritt ein Endereignis 42 ein, das das Verfahren beendet. Anderenfalls wird weiterhin mittels der Geschwindigkeitsregelung 26 die Geschwindigkeit 20 des Verstellteils 4 auf den Geschwindigkeits-Sollwert 28 geregelt.

Bei Auftreten der Schwergängigkeit 36 wird mittels einer Kraftregelung 44 die Antriebskraft 18 für eine erste Zeitspanne 46 auf den Kraft-Sollwert 32 geregelt. Nach Ablauf der ersten Zeitspanne 46 wird mittels einer weiteren Überwachungseinheit 34 überprüft, ob die Schwergängigkeit 36 ein Einklemmfall 48 ist. Die Unterscheidung wird anhand der realisierten Geschwindigkeit 20 des Antriebs 8 getroffen. Falls die Geschwindigkeit 20 beispielsweise null oder nahezu null beträgt, ist der Einklemmfall 48 identifiziert. Sollte ein Objekt, wie zum Beispiel eine Hand eines der Insassen des Kraftfahrzeugs, von der Fensterscheibe beaufschlagt werden, so tritt ein Einklemmereignis 50 ein. Hierbei wird der Antrieb 8 entweder angehalten oder derart angesteuert, dass sich das Verstellteil 4 in zur ursprünglichen Bewegungsrichtung entgegengesetzte Richtung bewegt, so dass das Objekt aus der Einklemmung befreit wird. Anderenfalls, wenn kein Einklemmfall 48 vorliegt, wird die Geschwindigkeit 20 des Antriebs 8 mittels einer Geschwindigkeitsanpassungseinheit 52 linear erneut auf den Geschwindigkeits-Sollwert 28 angepasst. Hierauf wird wiederum die Geschwindigkeitsregelung 26 aktiv.

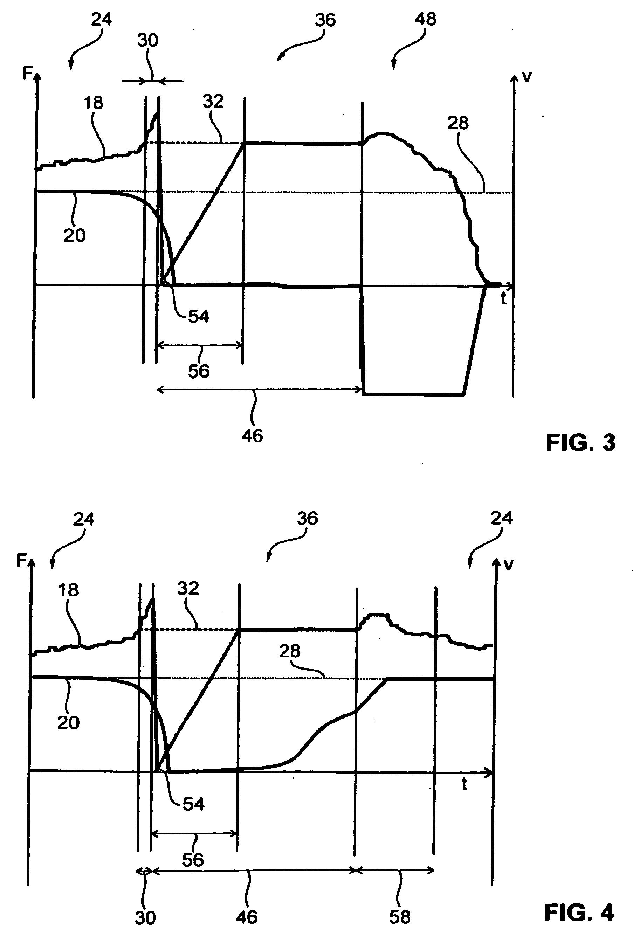

In Fig. 3 ist auszugsweise der zeitlichen Verlauf der Antriebskraft 18 und der Geschwindigkeit 20 des Antriebs 8 dargestellt. Im Normalbetrieb 24 wird die Geschwindigkeit 20 auf den Geschwindigkeits-Sollwert 28 geregelt. Steigt die hierfür benötigt Antriebskraft 18 über einen Grenzwert, so ist der Fall der Schwergängigkeit 36 identifiziert. Nun wird die Antriebskraft 18 für die erste Zeitspanne 46 auf den Kraft-Sollwert 32 geregelt. Dabei wird als Kraft-Sollwert 32 der Wert der Antriebskraft 18 herangezogen, der die dritte Zeitspanne 30 vor Beginn der Schwergängigkeit 36 als Antriebskraft 18 diente. Nach Erkennen der Schwergängigkeit 36, während der Regelung auf den Kraft-Sollwert 32, wird die Antriebskraft 18 zunächst auf eine erste Kraft 54 vermindert, wobei die erste Kraft 54 nahezu Null beträgt.

Innerhalb einer zweiten Zeitspanne 56 wird die Antriebskraft 18 linear auf den Kraft-Sollwert 32 erhöht. Während der ersten Zeitspanne 46 wird die Geschwindigkeit 20 des Antriebs 8 überwacht. Beträgt diese nach Ablauf der ersten Zeitspanne 46 Null oder nahezu Null, so wird davon ausgegangen, dass sich ein Objekt innerhalb des Verstellweges 10 befindet und somit der Einklemmfall 48 vorliegt. Zur Beendigung der Einklemmung wird daraufhin der Antrieb 8 reversiert. Das Verstellteil 4 bewegt sich nun in der zur ursprünglichen Bewegungsrichtung entgegengesetzten Richtung. Nachdem eine gewisse Zeitspanne verstrichen ist, wird beispielsweise der Antrieb 8 vollständig angehalten.

In Fig. 4 ist - im Gegensatz zu dem in Fig. 3 dargestellten Fall - die Schwergängigkeit 36 kein Einklemmfall 48. Nach Ablauf der ersten Zeitspanne 46 beträgt die Geschwindigkeit 20 nicht mehr Null, beispielsweise beträgt sie, wie hier gezeigt, annähernd ein Drittel des Geschwindigkeits-Sollwerts 28. An die Regelung auf den Kraft-Sollwert 32 schließt sich wieder die Regelung auf den Geschwindigkeits-Sollwert 28 an, wobei die Geschwindigkeit 20 linear auf den Geschwindigkeits-Sollwert 28 erhöht wird. Tritt innerhalb einer vierten Zeitspanne 58 nach der ersten Zeitspanne 46 eine weitere Schwergängigkeit 36 auf, so wird bei der erneuten Kraftregelung der bisherige Kraft-Sollwert 32 verwendet. Erst nach Ablauf der vierten Zeitspanne 58 wird der Kraft-Sollwert 32 wieder aktualisiert und entspricht der jeweils vor der dritten Zeitspanne 30 für die Verstellung benötigten Antriebskraft 18. Liegt keine weitere Schwergängigkeit 36 vor, befindet sich die Verstelleinrichtung 2 erneut im Normalbetrieb 24.

### Bezugszeichenliste

- 2: Verstelleinrichtung
- 4: Verstellteil
- 6: Tür
- 8: Antrieb
- 10: Verstellweg
- 12: Steuereinheit
- 14: Taster
- 16: Geschwindigkeits- und Kraftregelung
- 18: Antriebskraft
- 20: Geschwindigkeit
- 22: Startereignis
- 24: Normalbetrieb
- 26: Geschwindigkeitsregelung
- 28: Geschwindigkeits-Sollwert
- 30: dritte Zeitspanne
- 32: Kraft-Sollwert
- 34: Überwachungseinheit
- 36: Schwergängigkeit
- 38: positives Signal
- 40: negatives Signal
- 42: Endereignis
- 44: Kraftregelung
- 46: erste Zeitspanne
- 48: Einklemmfall
- 50: Einklemmereignis
- 52: Geschwindigkeitsanpassungseinheit
- 54: erste Kraft
- 56: zweite Zeitspanne
- 58: vierte Zeitspanne

## Patentansprüche

1. Verfahren zum Steuern einer Verstelleinrichtung (2) eines Kraftfahrzeugs, mit einem motorisch angetriebenen Verstellteil (4), bei dem zumindest in einem Teilbereich eines Verstellweges (10) im Normalbetrieb (24) die Geschwindigkeit (20) des Antriebs (8) auf einen Geschwindigkeits-Sollwert (28) und im Fall einer Schwergängigkeit (36) für eine erste Zeitspanne (46) die Antriebskraft (18) auf einen Kraft-Sollwert (32) geregelt wird, wobei nach Ablauf der ersten Zeitspanne (46)
- entweder das Verstellteil (4) reversiert oder der Antrieb (8) zumindest angehalten wird, wenn ein Einklemmfall (48) erkannt ist,
- oder die Geschwindigkeit (20) des Antriebs (8) erneut auf den Geschwindigkeits-Sollwert (28) geregelt wird, wenn der Fall der Schwergängigkeit (36) kein Einklemmfall (48) ist,
**dadurch gekennzeichnet,**
**dass** die Antriebskraft (18) bei Erfassung der Schwergängigkeit (36) zunächst auf eine erste Kraft (54) vermindert und innerhalb einer zweiten Zeitspanne (56) auf den Kraft-Sollwert (32) erhöht wird.

2. Verfahren nach Anspruch 1,
**dadurch gekennzeichnet,**
**dass** als Kraft-Sollwert (32) ein während des Normalbetriebs (24) realisierter Wert für die Antriebskraft (18) herangezogen wird.

3. Verfahren nach Anspruch 2,
**dadurch gekennzeichnet,**
**dass** der Kraft-Sollwert (32) im Normalbetrieb (24) kontinuierlich aktualisiert wird und dem vor einer dritten Zeitspanne (30) realisierten Wert der Antriebskraft (18) entspricht.

4. Verfahren nach Anspruch 2 oder 3,
**dadurch gekennzeichnet,**
**dass** nach Ablauf der ersten Zeitspanne (46) bei der erneuten Regelung auf den Geschwindigkeits-Sollwert (28) innerhalb einer vierten Zeitspanne (58) der Kraft-Sollwert (32) konstant gehalten wird und dem für die vorherige Kraftregelung verwendeten Kraft-Sollwert (32) entspricht.

5. Verfahren nach einem der Ansprüche 1 bis 4,
**dadurch gekennzeichnet,**
- **dass** anhand der Kraftänderung im Normalbetrieb (24) die Schwergängigkeit (36) erkannt wird, und
- **dass** anhand der Geschwindigkeitsänderung im Fall der Schwergängigkeit (36) der Einklemmfall (48) erkannt wird.

6. Verfahren nach einem der Ansprüche 1 bis 5,
**dadurch gekennzeichnet,**
**dass** nach Ablauf der ersten Zeitspanne (46) die Anpassung der Geschwindigkeit (20) auf den Geschwindigkeits-Sollwert (28) linear erfolgt.

7. Verfahren nach einem der Ansprüche 1 bis 6,
**dadurch gekennzeichnet,**
**dass** im Fall der Schwergängigkeit (36) die Antriebskraft (18) zunächst derart vermindert wird, dass die erste Kraft (54) nahezu Null beträgt.

8. Verfahren nach einem der Ansprüche 1 bis 7,
**dadurch gekennzeichnet,**
**dass** im Fall der Schwergängigkeit (36) innerhalb der zweiten Zeitspanne (56) die Erhöhung der Antriebskraft (18) auf den Kraft-Sollwert (32) linear erfolgt.

9. Verstelleinrichtung (2) eines Kraftfahrzeugs, mit einem Elektromotor (8), die vorgesehen und eingerichtet ist, ein Verfahren nach einem der Ansprüche 1 bis 8 durchzuführen.

10. Verwendung einer Verstelleinrichtung (2) eines Kraftfahrzeugs zur Durchführung eines Verfahrens nach einem der Ansprüche 1 bis 8.

## Claims

1. Method to control an adjustment device (2) of a motor vehicle, having an adjustment part (4) which is driven by a motor, in which the speed (20) of the drive (8) is regulated to a speed target value (28) at least in a partial region of an adjustment path (10) during normal operation (24) and the drive force (18) is regulated to a force target value (32) in the case of sluggishness (36) for a first period (46), wherein, after the expiry of the first period (46)
- either the adjustment part (4) is reversed or the drive (8) is at least stopped, if a jam (48) is recognised,
- or the speed (20) of the drive (8) is regulated again to the speed target value (28) if the case of sluggishness (36) is not a jam (48),
**characterised in that**
the drive force (18) is reduced at least to a first force (54) in the case of detection of sluggishness (36) and is increased to the force target value (32) within a second period (56).

2. Method according to claim 1,
**characterised in that**
a value for the drive force (18) which is achieved during normal operation (24) is used as a force target value (32).

3. Method according to claim 2,
**characterised in that**
the force target value (32) is continuously updated during normal operation (24) and corresponds to the value of the drive force (18) achieved before a third period (30).

4. Method according to claim 2 or 3,
**characterised in that**
after expiry of the first period (46), the force target value (32) is kept constant during the renewed regulation to the speed target value (28) within a fourth period (58) and corresponds to the force target value (32) used for the previous force regulation.

5. Method according to one of claims 1 to 4,
**characterised in that**
- the sluggishness (36) is recognised by means of the force change during normal operation (24), and
- in the case of sluggishness (36), the jam (48) is recognised by means of the speed change.

6. Method according to one of claims 1 to 5,
**characterised in that**
the adaptation of the speed (20) to the speed target value (28) occurs linearly after the expiry of the first period (46).

7. Method according to one of claims 1 to 6,
**characterised in that**
in the case of sluggishness (36), the drive force (18) is firstly reduced in such a way that the first force (54) amounts to almost zero.

8. Method according to one of claims 1 to 7,
**characterised in that**
the increase in the drive force (18) to the force target value (32) occurs linearly in the case of sluggishness (36) within the second period (56).

9. Adjustment device (2) of a motor vehicle, having an electromotor (8) which is provided and configured to implement a method according to one of claims 1 to 8.

10. Use of an adjustment device (2) of a motor vehicle to implement a method according to one of claims 1 to 8.

## Revendications

1. Procédé pour commander un dispositif de réglage de déplacement (2) dans un véhicule automobile, comprenant une pièce réglable en déplacement (4) entraînée par moteur, d'après lequel dans au moins dans une zone partielle d'un chemin de déplacement (10), la vitesse (20) de l'entraînement (8) est régulée, en fonctionnement normal (24), à une valeur de consigne de vitesse (28), et, dans le cas d'une dureté de fonctionnement (36), la force d'entraînement (18) est régulée, pour un premier laps de temps (46), à une valeur de consigne de force (32), procédé d'après lequel après écoulement du premier laps de temps (46)
- soit on inverse le sens de déplacement de la pièce réglable en déplacement (4) ou l'entraînement (8) est tout au moins arrêté, lorsqu'un cas de pincement ou de coincement (48) est détecté,
- soit on régule à nouveau la vitesse (20) de l'entraînement (8) à la valeur de consigne de vitesse (28), lorsque le cas de la dureté de fonctionnement (36) n'est pas un cas de pincement ou coincement (48),
**caractérisé**
**en ce que** lors de la détection de la dureté de fonctionnement (36), la force d'entraînement (18) est tout d'abord réduite à une première force (54), et est augmentée, à l'intérieur d'un deuxième laps de temps (56), à la valeur de consigne de force (32).

2. Procédé selon la revendication 1,
**caractérisé**
**en ce que** concernant la valeur de consigne de force (32), l'on prend en considération une valeur pour la force d'entraînement (18), qui a été réalisée pendant le fonctionnement normal (24).

3. Procédé selon la revendication 2,
**caractérisé**
**en ce que** la valeur de consigne de force (32) est actualisée de manière continuelle pendant le fonctionnement normal (24), et correspond à la valeur de la force d'entraînement (18) réalisée avant un troisième laps de temps (30).

4. Procédé selon la revendication 2 ou la revendication 3,
**caractérisé**
**en ce qu'**après écoulement du premier laps de temps (46), lors de la nouvelle régulation à la valeur de consigne de vitesse (28), la valeur de consigne de force (32) est maintenue constante à l'intérieur d'un quatrième laps de temps (58) et correspond à la valeur de consigne de force (32) utilisée pour la régulation de force précédente.

5. Procédé selon l'une des revendications 1 à 4, **caractérisé**
- **en ce qu'**au regard de la variation de force en fonctionnement normal (24), on détecte la dureté de fonctionnement (36), et
- **en ce qu'**au regard de la variation de vitesse dans le cas de la dureté de fonctionnement (36), on détecte le cas de pincement ou coincement (48).

6. Procédé selon l'une des revendications 1 à 5,
**caractérisé**
**en ce qu'**après écoulement du premier laps de temps (46), l'adaptation de la vitesse (20) à la valeur de consigne de vitesse (28) s'effectue de manière linéaire.

7. Procédé selon l'une des revendications 1 à 6,
**caractérisé**
**en ce que** dans le cas de la dureté de fonctionnement (36) la force d'entraînement (18) est tout d'abord réduite de telle façon que la première force (54) ait une valeur pratiquement nulle.

8. Procédé selon l'une des revendications 1 à 7,
**caractérisé**
**en ce que** dans le cas de la dureté de fonctionnement (36) l'augmentation de la force d'entraînement (18) à la valeur de consigne de force (32) à l'intérieur du deuxième laps de temps (56), s'effectue de manière linéaire.

9. Dispositif de réglage de déplacement (2) d'un véhicule automobile, comprenant un moteur électrique (8), et qui est prévu et configuré pour mettre en oeuvre un procédé selon l'une des revendications 1 à 8.

10. Utilisation d'un dispositif de réglage de déplacement (2) d'un véhicule automobile pour la mise en oeuvre d'un procédé selon l'une des revendications 1 à 8.
